# EUROPEAN PATENT APPLICATION

(11) **EP 1 414 040 A1**
(43) Date of publication of application: **28.04.2004**
(21) Application number: 02714531.7
(22) Date of filing: 08.04.2002
(51) Int. Cl.: G11B 25/04, G11B 33/12

(54) **DISC DRIVE**

(30) Priority: 10.04.2001 JP 2001111721
(71) Applicant: Citizen Watch Co. Ltd., Tokyo 188-8511 (JP)
(72) Inventor: TAKAHASHI, Shoji, c/o Citizen Watch Co., Ltd., Nishitokyo-shi, Tokyo 188-8511 (JP); FUJINUMA, Katsuhiko, c/o Citizen Watch co., Ltd., Nishitokyo-shi, Tokyo 188-8511 (JP); KOHYAMA, Takuro, c/o Citizen Watch Co., Ltd., Nishitokyo-shi, Tokyo 188-8511 (JP)
(74) Representative: Mounteney, Simon James
(86) International application number: PCT/JP2002/003485
(87) International publication number: WO 2002/084665

(57) **Abstract**

A tray-side terminal area of a disc drive unit (1) and a body-side terminal area on the body chassis side are connected electrically to each other by the use of a flat belt-shaped connecting wire (17). The belt-shaped connecting wire (17) is one general-purpose, belt-shaped FFC (17) with a given width and a given length that is folded at 45° at two positions (f, g) in its center. A part of the FFC (17) on the side of the body-side terminal area is fixed on a body chassis (2), while a part of the FFC (17) on the side of tray-side terminal area is lifted and bent in the shape of a horizontal U in the middle.

## Description

### TECHNICAL FIELD

The present invention relates to a disc drive unit that can be loaded with and drive an information recording disc, such as a compact disc (CD) or digital video disc (DVD), and serves to read and write information.

### BACKGROUND ART

A disc drive unit is incorporated in a host apparatus such as a notebook personal computer. This host apparatus has many mechanisms arranged at high density and its internal space has no allowance, so that the disc drive unit incorporated in the host apparatus must be made thin and compact.

In general, therefore, the disc drive unit has a construction such that a tray is slid relatively to a body chassis. A spindle motor for rotating a disc and a head drive mechanism are arranged on the tray.

Since the disc drive unit is made thin and compact, moreover, a flexible printed circuit (FPC) is used as electrical connecting means between the body chassis and the tray that moves relatively to the body chassis. The FPC uses a highly bendable film of polyimide or polyester as its substrate, and is adapted smoothly to bend following the motion of the tray when the tray moves relatively to the body chassis.

However, the FPC is expensive because it is manufactured having its unique circuit design and configuration for each unit type and lacks in general-purpose properties.

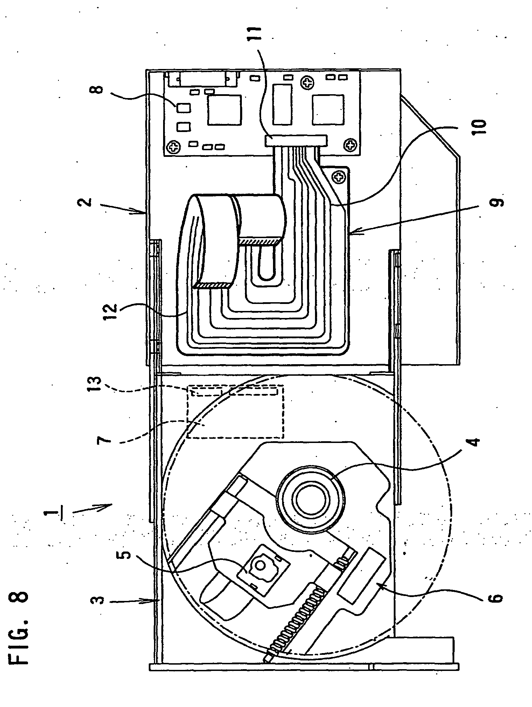

An example of a disc drive unit 1 that uses this FPC will be described with reference to FIG. 8.

In this disc drive unit 1, a tray 3 can slide relatively to a body chassis 2. A spindle motor 4, head 5, head drive mechanism 6, and circuit board 7 for head drive are arranged on the tray 3. On the other hand, the body chassis 2 is provided with a main circuit board 8 and an FPC 9. The FPC 9 is dedicated for the unit 1.

The circuit board 7 is located on the tray 3 in order to control mechanisms on the tray 3. It serves as a sub-circuit board (therefore, the sub-circuit board 7 will be referred to as the sub-circuit board 7 hereinafter), capable of relaying data or commands under the control of the main circuit board 8 that is located on the body chassis 2 and making simple decisions. Thus, the FPC 9 is used to connect the main circuit board 8 and the sub-circuit board 7 electrically.

The FPC 9 is obtained by forming a conduction path with a unique pattern on a polyester film. As seen from FIG. 8, it is U-shaped when it is placed on a flat surface (on the base of the body chassis 2).

The FPG 9 that is placed on the base of the body chassis 2 has its one end (end portion on the body chassis side) connected to a connector 11 of the main circuit board 8. Further, that part of the FPC 9 which is continuous with the end portion on the body chassis side is fixed on the base of the body chassis 2. In order to connect the other end (tray-side end portion) of the FPC 9, on the other hand, that part of the FPC 9 which is continuous with the tray-side end portion is lifted and then pulled toward the tray 3, as shown in FIG. 8. FIG. 8 shows a state in which the tray-side end portion of the FPC 9 is not connected to a connector 13 of the sub-circuit board 7 on the tray 3 yet. As seen from this drawing, that part of the FPC 9 which is continuous with the tray-side end portion is bent and reversed in the middle.

As the tray 3 advances or retreats with respect to the body chassis 2, the bent reversed region (moving curved portion) of the FPC 9, thus having the one end connected to the connector 11 of the main circuit board 8 on the body chassis 2 and the other end connected to the connector 13 of the sub-circuit board 7 on the tray 3, moves gradually in the moving direction of the tray.

### DISCLOSURE OF THE INVENTION

The object of the present invention is to provide a disc drive unit capable of lowering cost related to wiring, in particular.

A disc drive unit comprises a body chassis and a tray, and the tray can be moved between a disc loading position and a disc unloading position as it is slid relatively to the body chassis.

Normally, a main circuit board is fixed on the chassis side, while a spindle motor, head, head drive mechanism, sub-circuit board for these elements, etc. are fixed on the tray side.

The main circuit board has a connector portion (body terminal area) through which the disc drive unit is connected to a host apparatus such as a notebook personal computer, and performs control for driving a disc in response to a command from the host apparatus. The sub-circuit board is stored with control contents that should preferably be located close to tray-side mechanisms, such as the spindle motor on the tray side, a driver of the head drive mechanism, a buffer for temporarily storing data read from the disc by means of the head or data to be written into the disc through the head, etc. The sub-circuit board is provided with a connector (tray-side terminal area), relays data or commands under the control of the main circuit board, and makes simple decisions.

The main circuit board and the sub-circuit board are connected electrically to each other by means of a flat belt-shaped connecting wire (hereinafter referred to as belt-shaped connecting wire), such as a flexible flat cable (FFC) or general-purpose flexible printed circuit (FPC). The FFC is a general-purpose cable designed for electronic apparatuses, and is composed of a large number of fine conductor wires arranged parallel to one another and embedded in an easily bendable resin. It has the form of a thin belt that extends straight, and its opposite ends serve as terminal areas. The general-purpose FPC is also in the form of a flat belt.

Normally, the opposite sides of this belt-shaped connecting wire are assigned individually to distal- and proximal-end side portions with its longitudinal intermediate portion between them. In the intermediate portion, two creases are formed at angles of 90° to the longitudinal axis of the belt-shaped connecting wire in a manner such that first and second turn portions extend at angles of 45° and 225° , respectively, for example (the creases are symmetrical with respect to the longitudinal axis in many cases), and are bent to be reversed in the same direction. The respective bending directions of the distal- and proximal-end side portions are on the same side, i.e., the upper or lower surface side of the connecting wire, in some cases, and on different sides in other cases.

Thus, the belt-shaped connecting wire is folded in the intermediate portion in the shape of a right triangle. The distal-end-side portion (portion ranging from the second turn portion to the tray-side terminal area) and the proximal-end side portion (portion ranging from the first turn portion to the body-side terminal area) extend substantially parallel to each other from the triangle. The end of the proximal-end side portion is connected to the main circuit board, and the end of the distal-end side portion is connected to the sub-circuit board.

Normally, moreover, the belt-shaped connecting wire is attached to the body chassis in a manner such that the turn portion is located on the side in the tray drawing direction and that both the proximal-end side portion and the distal-end side portion that extend substantially parallel to each other are located on the chassis side. The attachment is based on adhesive bonding of the proximal-end side portion and the turn portion by means of a double-coated tape, fixing by means of raised claws, or fixing by means of screws. In one case, only the lower surface (chassis-side face) of the turn portion is fixed. In another case, the lap portion between the distal-end side portion and the intermediate portion that is created by bending the distal-end side portion is fixed besides the lower surface.

Usually, the distal-end side portion is arranged parallel to the sliding direction of the tray. To attain this, a U-shaped, reversedly curved portion is formed between the turn portion of the belt-shaped connecting wire and the tray-side terminal area. This curved portion changes its position as the tray slides (therefore, the curved portion will hereinafter be referred to as the moving curved portion). On the other hand, the turn portion that forms the distal-end side portion and the proximal-end side portion will hereinafter be referred to as the fixed-position turn portion, since it remains substantially in the same position even when the tray slides.

If the tray is slid relatively to the body chassis, the tray-side terminal area moves correspondingly. However, this movement is absorbed when the moving curved portion of the distal-end side portion changes its position as the tray moves. When the position of the moving curved portion is changed, the belt-shaped connecting wire is fixed to the body chassis at the proximal-end side portion, and the fixed-position turn portion is also fixed to the body chassis. Therefore, there is no possibility of the belt-shaped connecting wire getting considerably turned up when the tray is drawn out or the turned-up belt-shaped connecting wire touching the tray or a top cover of the body chassis and being damaged when the tray is pushed in.

If the FFC is utilized, all or some of the many conductor wires are used. In the latter case, unnecessary pins of the connector are left idle.

The FFC can be bent in various other forms than the aforesaid one. In some cases, the turn portion includes only the first turn portion, for example, so that the distal-end side portion and the proximal-end side portion are not parallel, that is, the FFC is turned at an angle. Even in this case, the distal-end side portion extends parallel to the sliding direction of the tray, the turn portion is located on the tray side, and the distal-end side portion is provided with a curvedly reversed portion.

### BRIEF DESCRIPTION OF THE DRAWINGS

FIG. 1 is a plan view of a disc drive unit according to the present invention using a folded FFC as a belt-shaped connecting wire;
FIG. 2 is a plan view showing a state in which the FFC of FIG. 1 is not folded yet;
FIG. 3 is a plan view showing a state in which the FFC of FIG. 2 is folded along creases to be used in the disc drive unit of FIG. 1;
FIG. 4 is a plan view showing the reverse side of the folded FFC shown in FIG. 3;
FIG. 5 is a perspective view showing a state in which the folded FFC shown in FIG. 3 is attached to the disc drive unit;
FIGS. 6A to 6D are views showing states in which the FFC of FIG. 2 is folded in other forms than the one shown in FIG. 3 to be used in the disc drive unit of FIG. 1;
FIG. 7 is a plan view showing the way the FFC folded in the form shown in FIG. 6C is used in the disc drive unit of FIG. 1; and
FIG. 8 is a plan view showing a prior art example of a disc unit 1 using an FPC as a belt-shaped connecting wire.

### BEST MODE FOR CARRYING OUT THE INVENTION

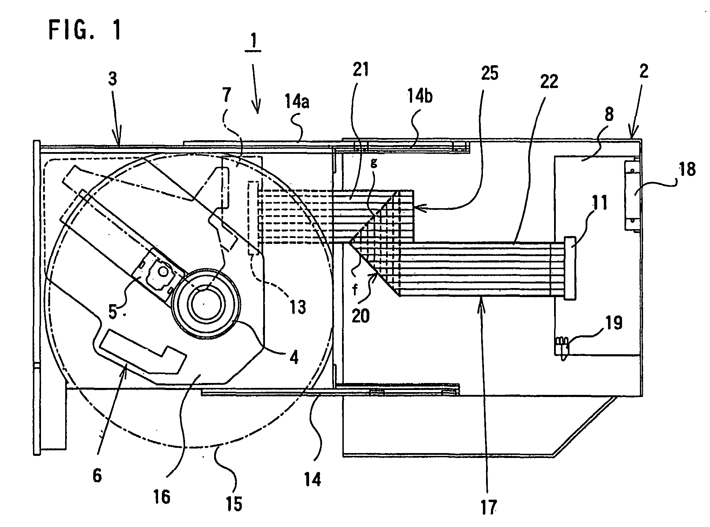

As shown in FIG. 1, a disc drive unit 1 comprises a body chassis 2 and a tray 3. The disc drive unit 1 is incorporated into a host apparatus such as a notebook personal computer.

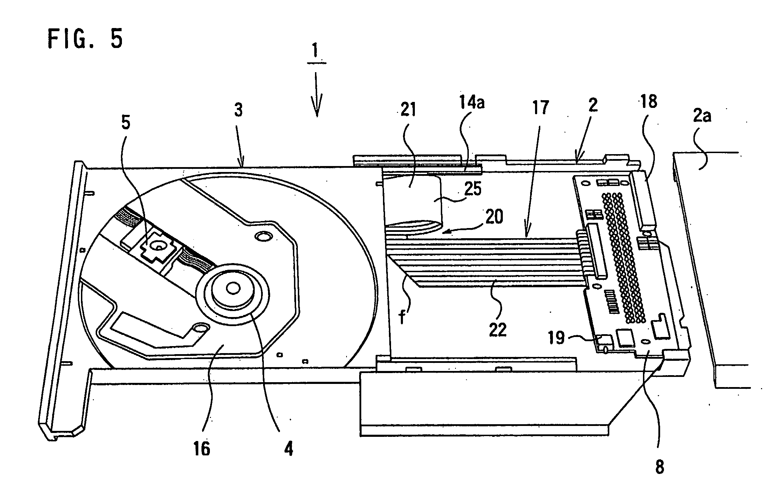

Normally, the body chassis 2 has a top cover 2a (FIG. 5). The body chassis 2 and the tray 3 have their respective bases formed of press-molded steel sheets. The tray 3 can slide with respect to the body chassis 2 with the aid of linear guides 14a and rails 14b that are arranged astride the body chassis 2 and the tray 3.

FIG. 1 shows the tray 3 drawn out of the body chassis. In this state, a disc 15 is attached to the tray 3, or the disc 15 is taken out of the tray 3.

If the tray 3 is pushed into the body chassis 2, the tray 3 is locked to the body chassis 2 in a manner such that it substantially overlaps the body chassis 2, and takes a loading position in which the disc 15 can be driven to rotate. If the tray 3 is unlocked, it is pushed outward for a short distance by means of a damper mechanism that is interposed between itself and the body chassis 2. Since the constructions of these elements are not especially different from those of conventional ones, a further description of the constructions is omitted.

A spindle motor 4, head 5, and head drive mechanism 6 are previously incorporated into a thread chassis 16. The thread chassis 16, which incorporates the spindle motor 4, head 5, and head drive mechanism 6, is mounted on the base of the tray 3. The head drive mechanism 6 includes a feed screw and a guide, which are arranged on the thread chassis 16, a thread motor for driving the feed screw, etc. Further, the tray 3 is provided with a sub-circuit board 7.

The sub-circuit board 7, which is arranged on the tray 3, has a data processing section, a driver section, etc. The data processing section delivers data that is read by the head 5 or is to be written by the head 5 to a main circuit board 8 on the body chassis 2. The driver section controls the drive of the spindle motor 4 and the thread motor.

The body chassis 2 is provided with the main circuit board 8 and a flexible flat cable (FFC) 17 as an example of a belt-shaped connecting wire. The main circuit board 8 has a connector 18. The main circuit board 8 analyzes commands that are delivered through the connector 18 from the host apparatus, into which the disc drive unit 1 is incorporated, drives the spindle motor 4 and the thread motor, and controls the timing for data transfer.

The body chassis 2 is further provided with a limit switch 19 for detecting the arrival of the tray 3 at the loading position.

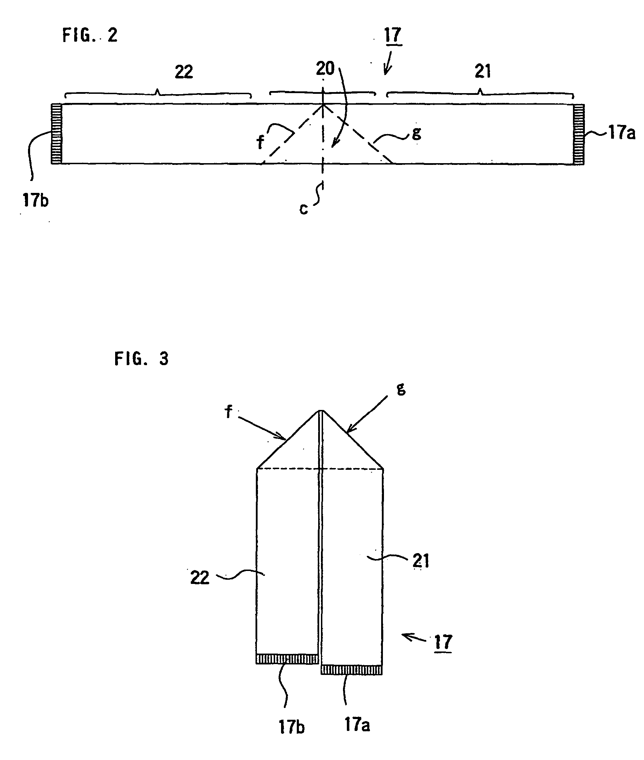

The FFC 17 shown in FIG. 1 is one belt-shaped FFC 17 with a given width and a given length that is folded at two positions in its center, as shown in FIG. 2, and is used in the disc drive unit 1. This belt-shaped FFC 17 is of a general-purpose type, and is commercially available under the trade name of "Sumicard" from Sumitomo Electric Industries, Ltd., an enterprise of Japan. The FFC 17 is a thin belt-shaped structure that is obtained by arranging 40 fine conductor wires parallel to one another. It can be easily curved and reversed (or bent to have a U-shaped cross section) with a short radius of curvature. Since it has suitable elasticity, on the other hand, it tends to be restored to its original shape even when it is curved. Flat terminals 17a and 17b are provided individually on the opposite ends of the FFC 17.

The following is a description of the way the one FFC 17 in the shape of a flat sheet shown in FIG. 2 is folded in the two central positions (along lines f and g of FIG. 2) and used in the disc drive unit 1 shown in FIG. 1.

First, the belt-shaped, general-purpose FFC 17 is marked with a dividing.line (indicated by chain line c in FIG. 2) that is located in a given position in its longitudinal direction and extends at right angles to the longitudinal direction. Then, the FFC 17 is marked with a first crease (indicated by dotted line f in FIG. 2) that is inclined right-handed at 45° to the dividing line c and a second crease (indicated by dotted line g in FIG. 2) that is inclined left-handed at 45°.

The FFC 17 of FIG. 2 is entirely folded at the spot indicated by dotted line f (region of dotted line f forms a bottom as the FFC is folded) in a manner such that a portion 20 in the shape of a right triangle surrounded by the first and second creases f and g of the FFC 17 is held down and that a left-hand portion (first portion) 22 of the FFC 17 is lifted. Hereinafter, the entirely folded portion indicated by dotted line f will be referred to as a first bent portion. Then, the FFC 17 is entirely folded at the spot indicated by dotted line g (region of dotted line g forms a bottom as the FFC is folded) in a manner such that the right-triangular portion 20 is held down and that a righthand portion (second portion) 21 of the FFC 17 is lifted. Hereinafter, the entirely folded portion indicated by dotted line g will be referred to as a second bent portion.

If the FFC 17 is folded along the first and second creases f and g, the FFC 17 takes the form shown in FIG. 3. The side of the first and second portions 22 and 21 of the FFC 17 shown in FIG. 3 is reverse to the side of the first and second portions 22 and 21 of the FFC 17 shown in FIG. 2. Since the angle between the first bent portion f and the second bent portion g is 90° (= 45 + 45), the first portion 22 and the second portion 21 of the FFC 17 extend parallel to each other, as shown in FIG. 3.

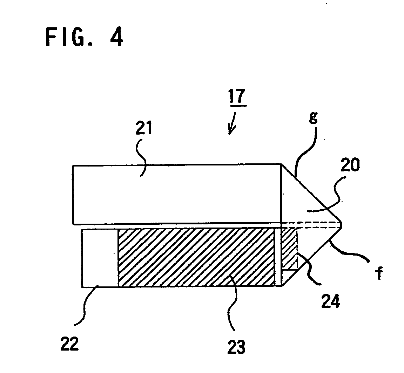

The FFC 17, which is thus folded twice to assume the form shown in FIG. 3, is placed in the posture shown in FIG. 1 on the body chassis 2. Thus, the FFC 17 that is placed on the body chassis is in a posture vertically reverse to the one shown in FIG. 3, having its right-triangular portion 20 on the end portion nearer to the tray 3. The first portion 22 and the right-triangular portion 20 of the FFC 17 are fixed on the body chassis 2 by means of double-coated adhesive tapes 23 and 24 (FIG. 4), respectively, which are laid between the body chassis 2 and the portions 22 and 20. The first bent portion f on the side of a body-side terminal area and the second bent portion g on the side of the tray-side terminal area, which define the right-triangular portion 20, form a fixed-position turn portion. The side of the FFC 17 shown in FIG. 4 is reverse to the side of the FFC 17 shown in FIGS. 1 and 3.

The end (terminal 17b) of the first portion 22 of the FFC 17 is connected to a connector 11 of the main circuit board 8 on the body chassis 2. Further, the extreme end of the second portion 21 that extends parallel to the first portion 22 is lifted and pulled toward the tray 3 so that the second portion 21 is curvedly reversed. This extreme end (terminal 17a) is connected to a connector of the sub-circuit board 7 on the tray 3.

In this state, the second portion 21 of the FFC 17 is curvedly reversed to have the shape of a horizontal U as viewed sideways, as shown in FIG. 5. That region of the second portion 21 on which its curved portion 25 (moving curved portion) is formed moves as the tray 3 moves with respect to the body chassis 2. The FFC 17 has moderate elasticity, and the other portions (first portion 22 and right-triangular portion 20) than the second portion 21 are fixed on the body chassis 2. Accordingly, the height of the curved portion 25 that is formed on the second portion 21 is substantially fixed without regard to the position of its formation. When the tray 3 is pushed into the body chassis, therefore, the curved portion 25 of the FFC 17 can be prevented from becoming greater and touching the top cover 2a of the body chassis 2 on the way.

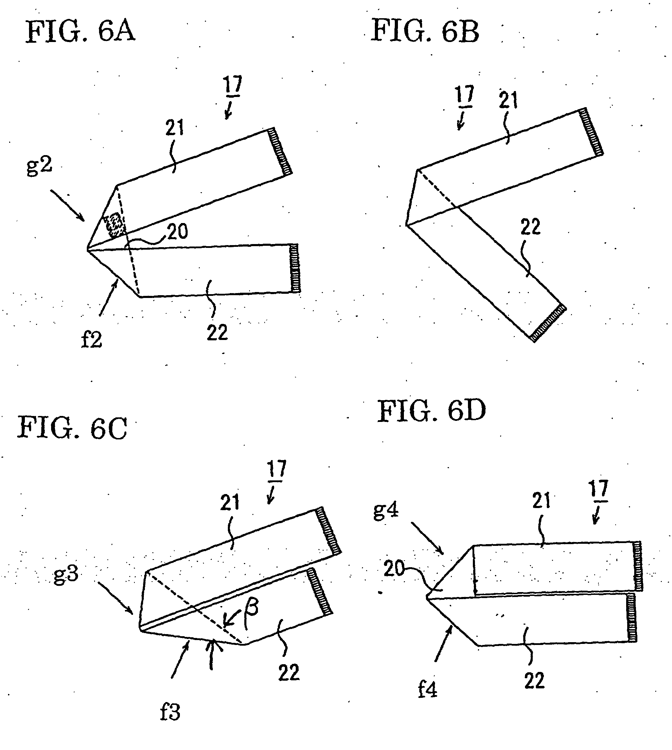

In the example described above, moreover, the FFC 17 is folded in the manner shown in FIGS. 2 and 3 if the general-purpose FFC 17 is used in the disc drive unit. The way of folding the FFC 17 is not limited to this manner, however, and the FFC 17 may alternatively be folded in the manners shown in FIGS. 6A to 6D.

FIG. 6A shows an example in which the angle between a first crease f2 and a second crease g2 of the FFC 17 shown in FIG. 2 is wider than 90° , and the first portion 22 and the second portion 21 of the FFC 17 are not parallel.

FIG. 6B shows an example in which the FFC 17 is folded only once, and the first portion 22 and the second portion 21 are not parallel.

In FIG. 6C, a first crease f3 and a second crease g3 are not inclined individually at 45° to dividing line c (FIG. 2) (i.e., not symmetrical with respect to the dividing line c). Since the angle between the line f3 and the line g3 is 90° , however, the first portion 22 and the second portion 21 of the FFC 17 are parallel.

FIG. 6D shows an example in which the first portion 22 of the FFC 17 shown in FIG. 2 is folded so that its first crease f4 forms a top, and the second portion 21 is then folded so that a second crease g4 forms a bottom. Thus, the first portion 22 and the second portion 21 of the FFC 17 are folded in different directions, so that the first portion 22 and the second .portion 21 of the FFC 17 shown in FIG. 6D are on the obverse side and the reverse side, respectively, or on the reverse side and the obverse side, respectively.

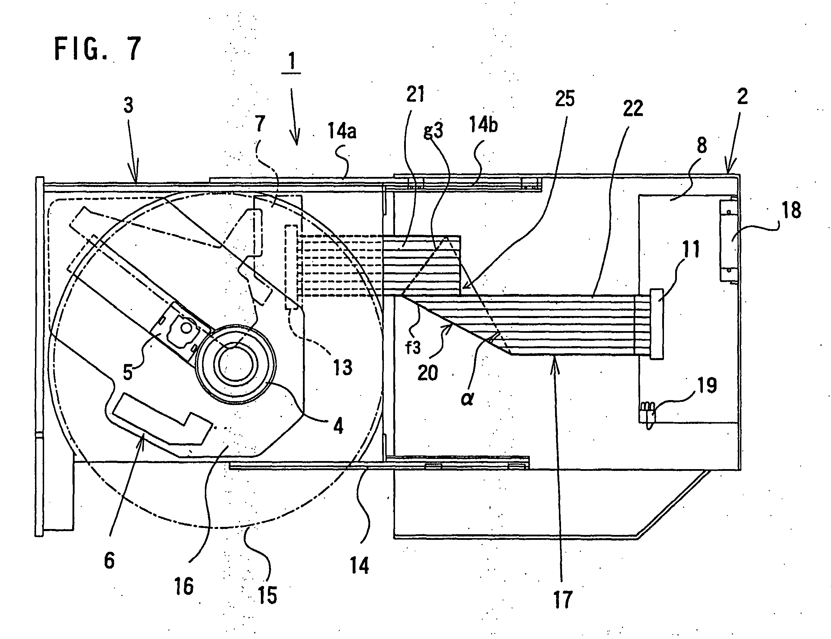

FIG. 7 shows an example in which the FFC 17 is folded in the manner shown in FIG. 6C and used in the disc drive unit 1. More specifically, the first portion 22 of the FFC 17 is folded along the first crease f3 which extends at an angle (angle β of FIG. 6C) of 45° or less to the dividing line. In consequence, the FFC 17 is formed having a triangular lap portion that has one side on the crease f3. That angle α of the triangle which is farther from the second crease g3 than the other angles is equal to the aforesaid angle β (FIG. 6C), which is narrower than 45° .

If the first turn portion f of the FFC 17 is turned back at 45° with the extreme end of the fixed-position turn portion (first and second turn portions f and g) of the FFC 17 located at the edge of the chassis 2 on the tray side, the limit (maximum-movement turn position) within which the moving curved portion 25 of the FFC 17 can approach on the extreme tray side is settled depending on the width of the FFC 17.

If the distance from the maximum-movement turn position to the tray-side terminal area is too long, the FFC 17 is obstructive when the tray 3 is held in position.

If the turn angle α of the first turn portion f3 is narrower than 45° , as shown in FIG. 7, therefore, the curved portion 25 can approach on the extreme tray side nearer to the tray 3 than to the maximum-movement turn position despite the uniform width of the FFC 17, so that the length of the FFC 17 from the maximum-movement curved portion to the tray-side terminal area can be shortened.

Although the FFC 17 is used as the belt-shaped connecting wire in the example described above, a general-purpose FPC that has moderate elasticity can be used in place of the FFC 17.

According to the present invention, as described above, the low-cost flat belt-shaped connecting wire is used for the wire arrangement of the disc drive unit on account of its high general-purpose properties. Thus, the wire arrangement. can be achieved at low cost without ruining the performance of wiring based on a conventional dedicated FPC, and the cost of the disc drive unit can be lowered.

## Claims

1. A disc drive unit comprising a body chassis supporting a tray holding a disc for linear sliding motion, in which a tray-side terminal area attached to the tray and a body-side terminal area attached to the body chassis are connected electrically to each other by means of a flat belt-shaped connecting wire,
wherein:
the connecting wire includes a fixed-position turn portion adapted to be reversed in a manner such that the connecting wire is fixed to the body-side terminal area and the tray-side terminal area and a moving curved portion to be reversed between the fixed-position turn portion and the tray-side terminal area; and
said connecting wire is configured lest a first part from the body-side terminal area to the turn portion and a second part from the turn portion to the tray-side terminal area substantially overlap flat as viewed in the direction perpendicular to the plane of said connecting wire.

2. The disc drive unit according to claim 1, wherein said fixed-position turn portion includes a first turn portion on the side of the body-side terminal area of the connecting wire and a second turn portion on the side of the tray-side terminal area of the connecting wire.

3. The disc drive unit according to claim 1 or 2, wherein that part of said connecting wire which extends from the first turn portion to the body-side terminal area is arranged extending parallel to the direction in which the tray slides.

4. The disc drive unit according to any one of claims 1 to 3, wherein that part of said connecting wire which extends from the second turn portion to the tray-side terminal area is arranged extending parallel to the direction in which the tray slides.

5. The disc drive unit according to any one of claims 1 to 4, wherein that part of said connecting wire which includes the fixed-position turn portion is fixed to the body chassis.

6. The disc drive unit according to any one of claims 2 to 5, wherein that angle which is formed on the side farthest from the second turn portion, among other angles formed in that part of the first turn portion which corresponds to the lap portion of the connecting wire, is narrower than 45° .

7. The disc drive unit according to any one of claims 1 to 5, wherein said connecting wire is a flexible flat cable (FFC).

8. The disc drive unit according to any one of claims 1 to 5, wherein said connecting wire is a flexible printed circuit.
